# EUROPÄISCHE PATENTSCHRIFT

(11) **EP 1 381 794 B1**
(45) Veröffentlichungstag und Bekanntmachung des Hinweises auf die Patenterteilung: **11.08.2004**
(21) Anmeldenummer: 02740478.9
(22) Anmeldetag: 18.04.2002
(51) Int. Cl.: F16H 3/091

(54) **FAHRZEUGGETRIEBE**
VEHICLE GEARBOX
BOITE DE VITESSES DE VEHICULE

(30) Priorität: 24.04.2001 DE 10120060
(43) Veröffentlichungstag der Anmeldung: 21.01.2004
(73) Patentinhaber: ZF FRIEDRICHSHAFEN AG, 88038 Friedrichshafen (DE)
(72) Erfinder: WAFZIG, Jürgen, 88097 Eriskirch (DE)
(86) Internationale Anmeldenummer: PCT/EP2002/004268
(87) Internationale Veröffentlichungsnummer: WO 2002/086352

(56) Entgegenhaltungen:
- EP-A- 0 625 652
- EP-A- 0 737 828
- DE-A- 2 802 166
- US-A- 4 757 726

## Beschreibung

Die Erfindung betrifft ein Fahrzeuggetriebe nach dem Oberbegriff von Anspruch 1, wie es aus EP-A-625 652, die als nächstliegender Stand der Technik betrachtet wird, bekannt ist.

Fahrzeuggetriebe in Vorgelegebauweise sind in konstruktiver Hinsicht und ganz besonders mit Rücksicht auf den Preis eine sehr günstige Getriebelösung. Sie besitzen in der Regel eine Antriebswelle und eine Abtriebswelle sowie eine zu diesen parallel angeordnete Vorgelegewelle. Der Kraftfluß fließt über einen Radsatz von der Antriebswelle auf die Vorgelegewelle und von dort über einen weiteren Radsatz auf die Abtriebswelle. Einer der Radsätze, der bei allen Gängen beteiligt ist und Konstante genannt wird, besitzt zwei Festräder, die miteinander kämmen und jeweils auf der Vorgelegewelle bzw. der Antriebswelle oder der Abtriebswelle sitzen. Der andere Radsatz besitzt ein Losrad und ein Festrad. Er ist jeweils einem Gang zugeordnet und wird geschaltet, indem das Losrad durch eine Schaltkupplung mit der entsprechenden Welle gekoppelt wird. Der Radsatz für den Rückwärtsgang, auch Wenderadsatz genannt, besitzt außerdem ein Zwischenrad, das einerseits mit dem Losrad und andererseits mit dem Festrad kämmt und so die Drehrichtung der Abtriebswelle gegenüber der Antriebswelle umkehrt.

Die Schaltkupplungen sind im Fahrzeuggetriebe in der Regel so angeordnet, dass sie durch mechanische Betätigungselemente vom Fahrer nacheinander betätigt werden können, indem er einen Schalthebel in zwei senkrecht zueinander angeordneten Bewegungsebenen betätigt. Durch die Bewegung in der ersten Bewegungsebene werden zwei Gänge einer Schaltgasse gewählt, und durch die Bewegung in der zweiten Bewegungsrichtung wird einer der gewählten Gänge geschaltet.

Um einen Fahrzeugmotor während der Fahrt im optimalen Betriebsbereich betreiben zu können, sind Getriebe mit vielen Gängen wünschenswert, wobei die Stufensprünge zwischen den einzelnen Gängen vom höchsten Gang zum niedrigsten Gang progressiv ansteigen sollen. Dadurch wird erreicht, dass der Fahrer durch eine feine Abstufung die Drehzahl des Fahrzeugmotors der Fahrzeuggeschwindigkeit gut anpassen kann. Ferner soll der gesamte Übersetzungsbereich des Fahrzeuggetriebes zwischen dem ersten und höchsten Gang groß sein, wobei das Verhältnis vom Übersetzungsbereich zur Anzahl der Gänge relativ groß sein und der Bauaufwand gering gehalten werden soll. Solche Fahrzeuggetriebe lassen sich mit einem vertretbaren Aufwand mit bis zu sechs Vorwärtsgängen ausführen.

Der Bauaufwand eines Fahrzeuggetriebes mit mehr Vorwärtsgängen kann dadurch verringert werden, dass einige Radsätze mehrfach genutzt werden, indem sie zum Bilden unterschiedlicher Gänge verwendet werden. Beispielsweise wird bei Gruppengetrieben einer Hauptgetriebegruppe eine Zusatzgetriebegruppe, bestehend aus zwei oder mehreren Radsätzen, vor- und/oder nachgeschaltet, so dass sich aus der Kombination der Radsätze der Zusatzgetriebegruppen mit den Radsätzen der Hauptgetriebegruppe die maximale Anzahl der Gänge des Fahrzeuggetriebes aus dem Produkt der Anzahl der Gänge der einzelnen Getriebegruppen ergibt. Die Stufensprünge zwischen den Radsätzen der Zusatzgetriebegruppe werden auf die Stufensprünge zwischen den Radsätzen der Hauptgetriebegruppe so abgestimmt, dass sich insgesamt eine brauchbare Abstufung des Fahrzeuggetriebes ergibt. Auf Grund des Gruppenaufbaus des Fahrzeuggetriebes ist im allgemeinen nur eine geometrische und keine progressive Abstufung des gesamten Übersetzungsbereichs möglich, da durch die Mehrfachnutzung der Radsätze der Hauptgetriebegruppe die Stufensprünge der Hauptgetriebegruppe mehrfach wiederkehren.

Die Zusatzgetriebegruppe wird in der Regel so ausgelegt, dass sie als so genannte Splitgetriebegruppe die Stufensprünge der Hauptgetriebegruppe unterteilt oder als so genannte Bereichsgetriebegruppe den Übersetzungsbereich der Hauptgetriebegruppe nach oben oder unten erweitert. Während die Hauptgetriebegruppe in der Regel so ausgelegt wird, dass sie mit mechanischen Mitteln durch Handkraft geschaltet werden kann, wird die Zusatzgetriebegruppe durch Fremdkraft, z.B. elektrisch, hydraulisch oder pneumatisch betätigt. Derartige Gruppengetriebe sind aus Konstruktionsbücher Band 26, Johannes Looman, Zahnradgetriebe, 1970 Springer-Verlag Berlin, Seiten 181 ff., für Getriebe mit acht und mehr Gängen bekannt.

Ferner ist es im Zuge verschärften Wettbewerbs zum Reduzieren der Kosten notwendig, Getriebefamilien für unterschiedliche Leistungsklassen und Einsatzverhältnisse mit einem hohen Anteil gleicher Teile zu bilden. Es ist bekannt, zu diesem Zweck Getriebe nach dem Baukastenprinzip aufzubauen.

Der Erfindung liegt die Aufgabe zugrunde, ein Fahrzeuggetriebe in einer Sechsgangversion und in einer Achtgangversion mit gleichen äußeren Abmessungen und vielen gleichen Bauteilen zu schaffen. Sie wird gemäß der Erfindung durch die Merkmale des Anspruchs 1 gelöst. Weitere Ausgestaltungen ergeben sich aus den Unteransprüchen.

Nach der Erfindung sind die Schaltkupplungen und Losräder der Hauptgetriebegruppe auf der Antriebswelle angeordnet, während die Losräder der Bereichsgetriebegruppe auf der Vorgelegewelle sitzen, wobei das Getriebeschema, eine Schalteinrichtung, und ein Getriebegehäuse für ein Fahrzeuggetriebe mit sechs Vorwärtsgängen gleich denen für ein Fahrzeuggetriebe mit acht Vorwärtsgängen ist. Ein wesentlicher Vorteil ist es, dass das kostenintensive Getriebegehäuse in beiden Versionen gleich ist und den gleichen Bauraum beansprucht. So kann nach Belieben entsprechend den Anforderungen des Einsatzfalls mit geringem Aufwand eine Sechsgangversion oder eine Achtgangversion des Fahrzeuggetriebes in das Fahrzeug eingebaut werden. Auf Grund des gleichen Getriebeschemas können im wesentlichen gleiche Schalteinrichtungen verwendet werden, wobei zweckmäßigerweise die Hauptgetriebegruppe mechanisch durch Handkraft geschaltet wird, während die Bereichsgetriebegruppe mittels einer Hilfskraft geschaltet wird.

Der Unterschied zwischen der Sechsgangversion und der Achtgangversion besteht darin, dass bei der Achtgangversion zunächst die vier Radsätze der Hauptgetriebegruppe für die Vorwärtsgänge mit einem Radsatz der Bereichsgetriebegruppe zusammenwirken und danach wieder zum ersten Radsatz der Hauptgetriebegruppe gewechselt wird, während die Bereichsgetriebegruppe zum anderen Radsatz wechselt. Bei der Sechsgangversion wird nach den ersten vier Gängen die Bereichsgetriebegruppe umgeschaltet, während die Hauptgetriebegruppe vom vierten Radsatz des vierten Gangs zum dritten Radsatz des dritten Gangs wechselt, so dass zusätzlich zu den ersten vier Gängen noch zwei weitere Vorwärtsgänge zur Verfügung stehen. Zweckmäßigerweise wird bei dieser Version der Stufensprung der Bereichsgetriebegruppe ungefähr gleich dem Quadrat des Stufensprungs zwischen dem dritten und vierten Gang gewählt.

Da der erste und zweite Radsatz der Hauptgetriebegruppe nur einmal, und zwar für den ersten und zweiten Gang genutzt werden, können bei dieser Getriebeversion die Stufensprünge zwischen den ersten vier Gängen zum ersten Gang hin progressiv zunehmen, so dass trotz einer geringen Gangzahl eine große Getriebespreizung mit einer feineren Abstufung in den oberen Gängen erreicht wird. Wenn man z.B. für den ersten Radsatz eine Übersetzung von ungefähr 3.5, für den zweiten Radsatz von etwa 1.94, für den dritten Radsatz von etwa 1.14, für den vierten Radsatz von etwa 0.80, für den fünften Radsatz von etwa 0.39 und den sechsten Radsatz von etwa 0.80 wählt, erreicht man eine Getriebespreizung von etwa 9.0 und Getriebesprünge zwischen dem ersten und zweiten Gang von 1.8, zwischen dem zweiten und dritten Gang von 1.71, zwischen dem dritten und vierten Gang von 1.43, zwischen dem vierten und fünften Gang von 1.44 und zwischen dem fünften und sechsten Gang von 1.43. Erhält der Wenderadsatz für den Rückwärtsgang eine Übersetzung von 3.23, so ergibt sich für den Rückwärtsgang in Verbindung mit dem fünften Radsatz eine Übersetzung von 8.28.

Für die Achtgangversion sind ungefähr folgende Übersetzungen vorteilhaft: für den ersten Radsatz 3.5, für den zweiten Radsatz 2.45, für den dritten Radsatz 1.72, für den vierten Radsatz 1.20. für den fünften Radsatz 0.29 und für den sechsten Radsatz 1.20. Daraus ergibt sich eine Getriebespreizung von ungefähr 12 bei einer geometrischen Abstufung mit Stufensprüngen von ungefähr 1.43. Der Wenderadsatz erhält zweckmäßigerweise eine Übersetzung von 3.16, so dass sich in Verbindung mit dem fünften Radsatz eine Übersetzung für den Rückwärtsgang von 11 ergibt.

Weitere Vorteile ergeben sich aus der folgenden Zeichnungsbeschreibung. In der Zeichnung sind Ausführungsbeispiele der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Getriebeschema für ein Fahrzeuggetriebe in einer Sechsgangversion und in einer Achtgangversion,
- Fig. 2: ein Schaltbild für eine Achtgangversion,
- Fig. 3: eine Tabelle mit Übersetzungen der Radsätze der Achtgangversion,
- Fig. 4: eine tabellarische Schaltlogik für die Achtgangversion,
- Fig. 5: ein Schaltbild für eine Sechsgangversion,
- Fig. 6: eine Tabelle mit Übersetzungen der Radsätze der Sechsgangversion und
- Fig. 7: eine tabellarische Schaltlogik für die Sechsgangversion.

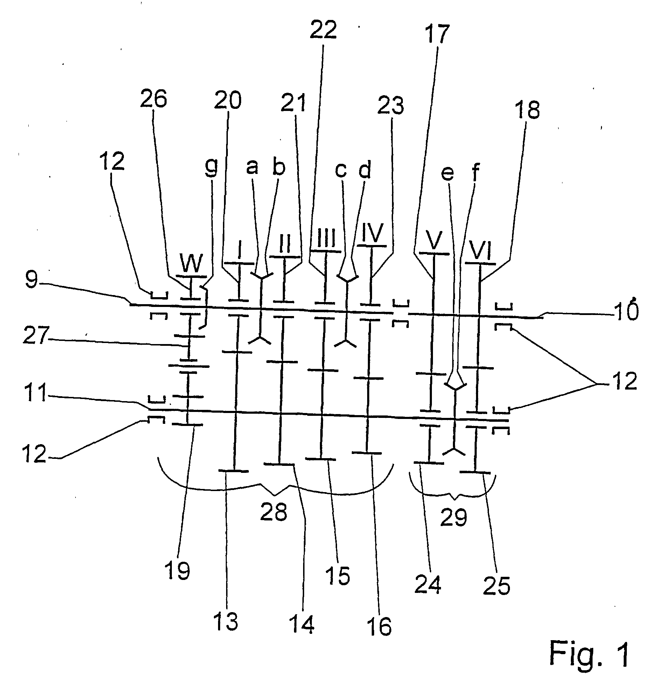

Das in Fig. 1 dargestellte Getriebeschema gilt für eine Sechsgangversion und Achtgangversion eines Fahrzeuggetriebes. Es umfasst eine Hauptgetriebegruppe 28 mit einem ersten bis vierten Radsatz I bis IV sowie einen Wenderadsatz W und einer nachgeschalteten Bereichsgetriebegruppe 29 mit einem fünften Radsatz V und einem sechsten Radsatz VI. Die Radsätze eins bis sechs I bis VI und der Wenderadsatz W besitzen jeweils ein Losrad 20 bis 26 und ein Festrad 13 bis 19. Die Losräder 20 bis 23 und 26 der Hauptgetriebegruppe 28 sind auf einer Antriebswelle 9 gelagert und durch Schaltkupplungen a, b, c, d und g mit dieser koppelbar. Die Schaltkupplungen a, b, c, d und g werden zweckmäßigerweise durch eine nicht näher dargestellte mechanische Handschalteinrichtung geschaltet. Die Festräder 13 bis 16 und 19 sitzen auf einer zur Antriebswelle 9 achsparallelen Vorgelegewelle 11.

Die Festräder 17, 18 der Bereichsgetriebegruppe 29 sitzen auf einer Abtriebswelle 10, während die dazugehörigen Losräder 24 und 25 auf der Vorgelegewelle 11 gelagert sind und über Schaltkupplungen e und f mit dieser koppelbar sind. Die Schaltkupplungen e und f werden zweckmäßigerweise durch eine nicht dargestellte, durch eine Hilfskraft betätigte Schalteinrichtung betätigt, z.B. elektrisch, hydraulisch oder pneumatisch. Die Antriebswelle 9, die Abtriebswelle 10 und die Vorgelegewelle 11 sind in Lagern 12 eines nicht dargestellten Getriebegehäuses gelagert.

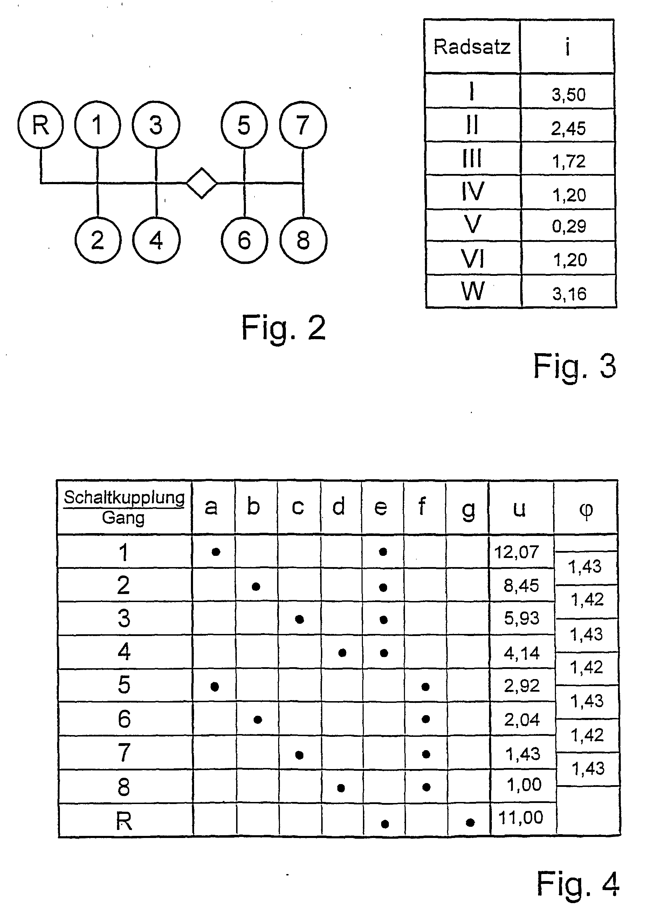

Fig. 2 zeigt ein Schaltbild eines Fahrzeuggetriebes in Achtgangversion, wobei der Rückwärtsgang R, der erste Gang 1, der dritte Gang 3, der fünfte Gang 5 und der siebte Gang 7 in Vorwärtsfahrtrichtung des Fahrzeugs geschaltet werden, während der zweite Gang 2, der vierte Gang 4, der sechste Gang 6 und der achte Gang 8 in entgegengesetzter Richtung betätigt werden. Beim Schalten von der Schaltgasse des dritten und vierten Gangs 3, 4 in die Schaltgasse des fünften oder sechsten Gangs 5, 6 wird die durch Hilfskraft betätigte Schalteinrichtung der Bereichsgetriebegruppe 29 betätigt, während in der Hauptgetriebegruppe 28 in den ersten bzw. zweiten Gang 1, 2 zurückgeschaltet wird.

Fig. 4 zeigt eine entsprechende Schaltlogik. Schwarze Punkte geben an, welche Schaltkupplungen a bis g in den einzelnen Gängen 1 bis 8 und R betätigt sind. Aus einzelnen Übersetzungen i der Radsätze I bis VI und W nach der Tabelle in Fig. 3 ergeben sich die Getriebeübersetzungen u entsprechend der vorletzten Spalte in Fig. 4 mit den entsprechenden Stufensprüngen ϕ nach der letzen Spalte in Fig. 4.

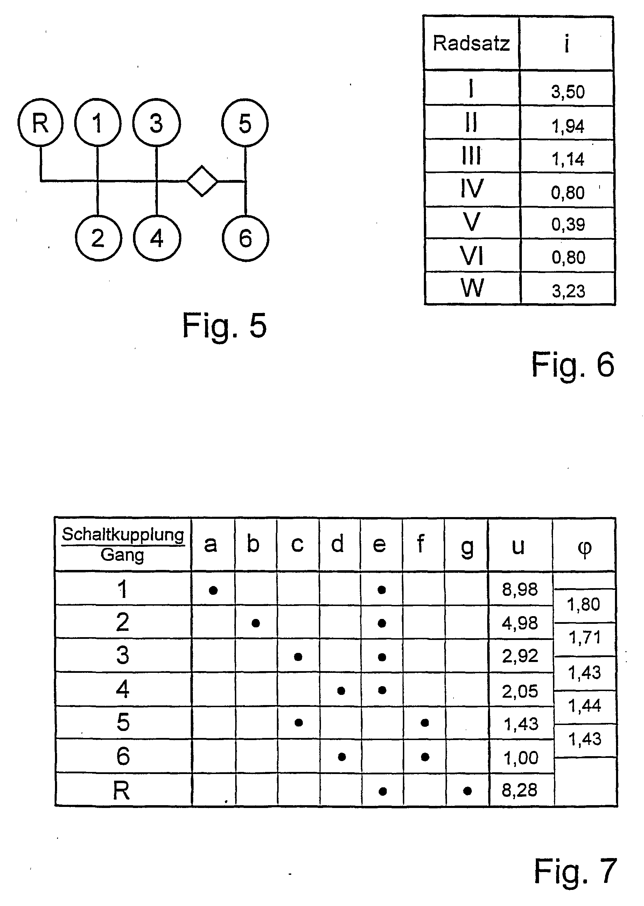

Das gleiche Getriebeschema nach Fig. 1 kann für eine Sechsgangversion des Fahrzeuggetriebes verwendet werden. In diesem Fall zeigen die Fig. 5 bis 7 ein zweckmäßiges Schaltbild, vorteilhafte Einzelübersetzungen i für die Radsätze I bis VI und W und eine passende Schaltlogik. Bei dem Schaltbild nach Fig. 5 liegen der Rückwärtsgang R, der erste Gang 1, der dritte Gang 3 und der fünfte Gang 5 in Vorwärtsfahrtrichtung, während der zweite Gang 2, der vierte Gang 4 und der sechste Gang 6 in Rückwärtsfahrtrichtung angeordnet sind. Auch in diesem Fall werden die ersten vier Gänge 1 bis 4 mechanisch von Hand geschaltet, während die der Bereichsgetriebegruppe 29 beim Übergang von der Schaltgasse des dritten und vierten Gangs 3, 4 in die Schaltgasse des fünften und sechsten Gangs 5, 6 mit Hilfskraft betätigt werden.

Bei den ersten vier Gängen 1 bis 4 wird der Kraftfluß über den fünften Radsatz V der Bereichsgetriebegruppe 29 und jeweils über den ersten bis vierten Radsatz I bis IV der Hauptgetriebegruppe 28 geleitet. Beim Wechsel zum fünften Gang 5 bzw. sechsten Gang 6 wird in der Bereichsgetriebegruppe 29 auf den sechsten Radsatz VI geschaltet, während in der Hauptgetriebegruppe 28 der dritte Radsatz III bzw. der vierte Radsatz IV geschaltet ist. Der Stufensprung ϕ der Bereichsgetriebegruppe 29 zwischen dem fünften Radsatz V mit einer Übersetzung i von 0.39 und dem sechsten Radsatz VI mit einer Übersetzung i von 0.8 ist gleich 2.05 und ist damit ungefähr gleich dem Quadrat des Stufensprungs ϕ zwischen dem dritten und vierten Gang 3, 4, der ebenfalls 2.05 beträgt. So ergeben sich zum ersten Gang hin progressive Stufensprünge ϕ von 1.43 zwischen dem dritten und vierten Gang 3, 4, von 1.71 zwischen dem zweiten und dritten Gang 2, 3 von 1.80 zwischen dem ersten Gang 1 und dem zweiten Gang 2. Die Stufensprünge ϕ zwischen dem vierten Gang 4 und dem fünften Gang 5 sowie dem fünften Gang 5 und dem sechsten Gang 6 sind einander gleich und betragen etwa 1.43. Dadurch ist in höheren Gängen 4 bis 6 eine feine Abstufung gegeben.

Aus der Schaltlogik nach Fig. 7 geht hervor, dass bei der Sechsgangversion der Kraftfluß in den ersten vier Gängen 1 bis 4 wie bei der Achtgangversion über den fünften Radsatz V und jeweils über einen der ersten vier Radsätze I bis IV geleitet wird. Im fünften Gang 5 und im sechsten Gang 6 wird der Kraftfluß über den sechsten Radsatz VI und über den dritten Radsatz III bzw. über den vierten Radsatz IV geleitet. Der Rückwärtsgang R wird durch den Wenderadsatz W und den fünften Radsatz V gebildet, indem die entsprechenden Schaltkupplungen e und g geschaltet sind. Zusammen mit einer Übersetzung des Wenderadsatzes W von 3.23 ergibt sich eine Getriebeübersetzung u im Rückwärtsgang R von 8.28.

### Bezugszeichen

- 1: erster Gang
- 2: zweiter Gang
- 3: dritter Gang
- 4: vierter Gang
- 5: fünfter Gang
- 6: sechster Gang
- 7: siebter Gang
- 8: achter Gang
- 9: Antriebswelle
- 10: Abtriebswelle
- 11: Vorgelegewelle
- 12: Lager
- 13: erstes Festrad
- 14: zweites Festrad
- 15: drittes Festrad
- 16: viertes Festrad
- 17: fünftes Festrad
- 18: sechstes Festrad
- 19: siebtes Festrad
- 20: erstes Losrad
- 21: zweites Losrad
- 22: drittes Losrad
- 23: viertes Losrad
- 24: fünftes Losrad
- 25: sechstes Losrad
- 26: siebtes Losrad
- 27: Zwischenrad
- 28: Hauptgetriebegruppe
- 29: Bereichsgetriebegruppe

- I: erster Radsatz
- II: zweiter Radsatz
- III: dritter Radsatz
- IV: vierter Radsatz
- V: fünfter Radsatz
- VI: sechster Radsatz
- W: Wenderadsatz
- R: Rückwärtsgang

- a: erste Schaltkupplung
- b: zweite Schaltkupplung
- c: dritte Schaltkupplung
- d: vierte Schaltkupplung
- e: fünfte Schaltkupplung
- f: sechste Schaltkupplung
- g: siebte Schaltkupplung

- u: Getriebeübersetzung
- i: Übersetzung
- ϕ: Stufensprung

## Patentansprüche

1. Fahrzeuggetriebe mit einer Antriebswelle (9), einer Abtriebswelle (10) und einer Vorgelegewelle (11), die achsparallel zu den genannten Wellen (9, 10) angeordnet ist und triebmäßig über Radsätze (I bis VI und W) mit diesen durch Schaltkupplungen (a bis g) verbunden werden kann, wobei vier Radsätze (I, II, III, IV) und ein Wenderadsatz (W) mit jeweils einem Losrad (20, 21, 22, 23, 26) und mit einem Festrad (13, 14, 15, 16, 19) eine Hauptgetriebegruppe (28) und zwei Radsätze (V, VI) mit jeweils einem Losrad (24, 25) und einem Festrad (17, 18) eine nachgeschaltete Bereichsgetriebegruppe (29) bilden, **dadurch gekennzeichnet, dass** die Schaltkupplungen (a, b, c, d, g) und die Losräder (20, 21, 22, 23, 26) der Hauptgetriebegruppe (28) auf der Antriebswelle (9) angeordnet sind, während die Losräder (24, 25) der Bereichsgetriebegruppe (29) auf der Vorgelegewelle (11) sitzen, wobei das Getriebeschema, eine Schalteinrichtung und ein Getriebegehäuse für ein Fahrzeuggetriebe mit sechs Vorwärtsgängen (1 bis 6) gleich denen für ein Fahrzeuggetriebe mit acht Vorwärtsgängen (1 bis 8) ist.

2. Fahrzeuggetriebe nach Anspruch 1, **dadurch gekennzeichnet, dass** bei dem Fahrzeuggetriebe mit sechs Vorwärtsgängen (1 bis 6) ein Stufensprung (ϕ) der Bereichsgetriebegruppe (29) ungefähr gleich dem Quadrat des Stufensprungs (ϕ) zwischen dem dritten und vierten Gang (3, 4) ist, der dritte Radsatz (III) mit dem sechsten Radsatz (VI) den fünften Gang (5) und der vierte Radsatz (IV) mit dem sechsten Radsatz (VI) den sechsten Gang (6) bilden.

3. Fahrzeuggetriebe nach Anspruch 1 oder 2, **dadurch gekennzeichnet, dass** bei dem Fahrzeuggetriebe mit sechs Vorwärtsgängen (1 bis 6) die Stufensprünge (ϕ) zwischen den ersten vier Gängen (1, 2, 3, 4) zum ersten Gang (1) hin progressiv zunehmen.

4. Fahrzeuggetriebe nach einem der vorhergehenden Ansprüche, **dadurch gekennzeichnet, dass** bei dem Fahrzeuggetriebe mit sechs Vorwärtsgängen (1 bis 6) die Radsätze ungefähr folgende Übersetzungen (i) haben: Der erste Radsatz (I) 3.5, der zweite Radsatz (II) 1.94, der dritte Radsatz (III) 1.14, der vierte Radsatz (IV) 0.80, der fünfte Radsatz (V) 0.39, der sechste Radsatz (VI) 0.80 und der Wenderadsatz (W) 3.23.

5. Fahrzeuggetriebe nach einem der vorhergehenden Ansprüche, **dadurch gekennzeichnet, dass** bei dem Fahrzeuggetriebe mit acht Vorwärtsgängen (1 bis 8) die Radsätze ungefähr folgende Übersetzungen (i) haben: Der erste Radsatz (I) 3.5, der zweite Radsatz (II) 2.45, der dritte Radsatz (III) 1.72, der vierte Radsatz (IV) 1.20, der fünfte Radsatz (V) 0.29, der sechste Radsatz (VI) 1.20 und der Wenderadsatz (W) 3.16.

## Claims

1. The invention relates to a vehicle transmission having an input shaft (9), an output shaft (10) and a countershaft (11), which is arranged parallel to the axis of said shafts (9, 10) and via gear sets (I through VI and W) can be drivingly connected to said shafts by means of shifting clutches (a through g), with a mainbox unit (28) being formed by four gear sets (I, II, III, IV) and a reversing gear set (W) with an idler each (20, 21, 22, 23, 26) and a fixed gear (13, 14, 15, 16, 19), and with a secondary range-change unit (29) being formed by two gear sets (V, VI) with one idler each (24, 25) and a fixed gear (17, 18), **characterized in that** the shift clutches (a, b, c, d, g) and the idlers (20, 21, 22, 23, 26) of the mainbox unit (28) are arranged on the input shaft (9) while the idlers (24, 25) of the range-change unit (29) are located on the countershaft (11), and **characterized in that** the shift pattern, a shifting component and a transmission housing for a vehicle transmission with six forward gears (1 through 6) are the same as those for a vehicle transmission with eight forward gears (1 through 8).

2. Vehicle transmission according to claim 1, **characterized in that** in the vehicle transmission with six forward gears (1 through 6), one step (ϕ) of the range-change unit (29) roughly equals the square of the step (ϕ) between the third and fourth gear (3, 4), and **in that** the fifth gear (5) is formed by the third gear set (III) and the sixth gear set (VI) and the sixth gear is formed by the fourth gear set (IV) and the sixth gear set (VI).

3. Vehicle transmission according to claim 1 or 2, **characterized in that** in the vehicle transmission with six forward speeds (1 through 6), the steps (ϕ) between the first four gears (1, 2, 3, 4) progressively increase toward the first gear (1).

4. Vehicle transmission according to one of the preceding claims, **characterized in that** in the vehicle transmission with six forward gears (1 through 6), the gear sets roughly have following ratios (i): the first gear set (I), 3.5; the second gear set (II), 1.94; the third gear set (III), 1.14; the fourth gear set (IV), 0.80; the fifth gear set (V), 0.39; the sixth gear set (VI), 0.80; and the reversing gear set (W), 3.23.

5. Vehicle transmission according to one of the preceding claims, **characterized in that** in the vehicle transmission with eight forward gears (1 through 8), the gear sets roughly have the following ratios (i): the first gear set (I), 3.5; the second gear set (II), 2.45; the third gear set (III), 1.72; the fourth gear set (IV), 1.20; the fifth gear set (V), 0.29; the sixth gear set (VI), 1.20; and the reversing gear set (W), 3.16.

## Revendications

1. Transmission de véhicule avec un arbre d'entraînement (9), un arbre de sortie (10) et un arbre intermédiaire (11) qui est parallèle aux arbres mentionnés (9, 10) et qui peut être relié, avec un entraînement, à ceux-ci par l'intermédiaire de trains d'engrenages (I à VI et W) avec des embrayages (a à g), quatre trains d'engrenages (I, II, III, IV) et un train d'engrenages d'inversion (W), avec chacun une roue mobile (20, 21, 22, 23, 26) et une roue fixe (13, 14, 15, 16, 19), constituant un groupe de transmission principal (28) et deux trains d'engrenages (V, VI) avec chacun une roue mobile (24, 25) et une roue fixe (17, 18) constituant un groupe de transmission de régime aval (29), **caractérisée en ce que** les embrayages (a, b, c, d, g) et les roues mobiles (20, 21, 22, 23, 26) du groupe de transmission principal (28) sont disposés sur l'arbre d'entraînement (9), tandis que les roues mobiles (24, 25) du groupe de transmission de régime (29) se trouvent sur l'arbre intermédiaire (11), le schéma de la transmission, un dispositif d'enclenchement et un carter de transmission d'un véhicule avec six rapports de marche avant (1 à 6) étant les mêmes que ceux d'une transmission de véhicule avec huit rapports de marche avant (1 à 8).

2. Transmission de véhicule selon la revendication 1, **caractérisée en ce que**, dans la transmission de véhicule avec six rapports de marche avant (1 à 6), un saut de palier (ϕ) du groupe de transmission de régime (29) est approximativement égal au carré du saut de palier (ϕ) entre le troisième et le quatrième rapport (3, 4), le troisième train d'engrenages (III) constitue, avec le train d'engrenages (VI), le cinquième rapport (5) et le quatrième train d'engrenages (IV) constitue, avec le sixième train d'engrenages (VI), le sixième rapport (6).

3. Transmission de véhicule selon la revendication 1 ou 2, **caractérisée en ce que**, dans la transmission de véhicule avec six rapports de marche avant (1 à 6), les sauts de palier (ϕ) entre les quatre premiers rapports (1, 2, 3, 4) augmentent jusqu'au premier rapport (1).

4. Transmission de véhicule selon l'une des revendications précédentes, **caractérisée en ce que,** dans la transmission de véhicule avec six rapports de marche avant (1 à 6), les trains d'engrenages ont approximativement les démultiplications (i) suivantes : le premier train d'engrenages (I) 3.5, le deuxième train d'engrenages (II) 1.94, le troisième train d'engrenages (III) 1.14, le quatrième train d'engrenages (IV) 0.80, le cinquième train d'engrenages (V) 0.39, le sixième train d'engrenages (VI) 0.80 et le train d'engrenages d'inversion (W) 3.23.

5. Transmission de véhicule selon l'une des revendications précédentes, **caractérisée en ce que**, dans la transmission de véhicule avec huit rapports de marche avant (1 à 8), les trains d'engrenages ont approximativement les démultiplications (i) suivantes : le premier train d'engrenages (I) 3.,5, le deuxième train d'engrenages (II) 2.45, le troisième train d'engrenages (III) 1.72, le quatrième train d'engrenages (IV) 1.20, le cinquième train d'engrenages (V) 0.29, le sixième train d'engrenages (VI) 1.20 et le train d'engrenages d'inversion (W) 3.16.
